# EUROPEAN PATENT SPECIFICATION

(11) **EP 3 575 504 B1**
(45) Date of publication and mention of the grant of the patent: **24.12.2025**
(21) Application number: 19176998.3
(22) Date of filing: 28.05.2019
(51) Int. Cl.: E03F 5/02

(54) **FLOW CHANNEL FOR AN INSPECTION CHAMBER OR MAN-HOLE**
STRÖMUNGSKANAL FÜR EINE INSPEKTIONSKAMMER ODER EIN MANNLOCH
CANAL D'ÉCOULEMENT POUR CHAMBRE D'INSPECTION OU REGARD

(30) Priority: 01.06.2018 FI 20185502
(43) Date of publication of application: 04.12.2019
(73) Proprietor: Uponor Infra Oy, 01510 Vantaa (FI)
(72) Inventor: TOMCZYK, Jacek, 01510 Vantaa (FI); SILLANPÄÄ, Ari, 01510 Vantaa (FI)
(74) Representative: Fenner, Seraina

(56) References cited:
- EP-A2- 2 295 655
- CN-U- 202 577 351
- DE-A1- 2 509 909
- JP-U- S57 151 452

## Description

### FIELD

The present invention relates to a system for an inspection chamber or a man-hole, the system comprising a flow channel and a support frame.

Further, the present invention relates to a method of manufacturing a flow channel for an inspection chamber or man-hole.

### BACKGROUND

Inspection chambers or man-holes are known by means of which a person can have access to a sewer system, a storm water removal system, a system for processing or transporting liquids, and the like. The inspection chambers or man-holes are normally used for providing access to a flow channel for reasons of inspection, maintenance, cleaning, de-clogging, and the like. Said inspection chambers or man-holes are typically buried into the ground, for example below the tarmac of a street or below a walkway. Conventional systems employed for handling sewage, storm drainage and the like employ vertically oriented inspection chambers or manholes of generally cylindrical shape which are positioned at juncture locations of diverse flow pipes or at positions where flow pipes change their orientation. The inspection chambers or man-holes typically include a cover which can be manually removed in order to provide access to a respective inspection chamber or man-hole.

Each inspection chamber or man-hole comprises at least two flow openings or sewage water openings, i.e. at least one inlet opening for inwardly flowing material and at least one outlet opening for outwardly flowing material. An inflow pipe is connected to each inlet opening and an outflow pipe is connected to each outlet opening.

Of course, also more than two sewer pipes may be connected to the inspection chamber or man-hole. There may be a plurality of inlet openings and/or a plurality of outlet openings comprised by the inspection chamber or man-hole. Inflow pipes frequently arrive at different elevations and are frequently of different sizes. Also outflow pipes frequently depart at different elevations and are frequently of different sizes.

When building a sewer system or replacing an existing inspection chamber or man-hole by a new one, it is often not possible to use a standardized inspection chamber or man-hole, because the dimensions of the pipes, the orientations of the pipes and the depths of the pipes in the ground differ on a case by case basis. Therefore, the flow channel within the inspection chamber or man-hole has typically to be adapted accordingly.

Document US 4867411 A discloses a plurality of invert forming mold members which are bolted together and have their ends received in internal frames provided at adjacent pipe openings in a manhole. The mold members are formed of relatively thick and heavy polyurethane and are of U-shaped cross-section. A mold supporting plate is provided in each of the internal mounting frames and has an opening configured to matingly receive the endmost mold component. The mold components are provided in a variety of linear lengths, angular curved configurations and elevation changing members so that they can be associated to form inverts required for any particular manhole configuration. The assembly of mold members is strong and rigid and does not require any additional internal bracing. However, a substantial amount of U-shaped members has to be cut into a predetermined form prior to bolting the members together in order to form a flow channel. Therefore, forming of the flow channel requires a substantial number of parts and is time consuming and labour intensive. Due to the high number of U-shaped profiles, there is further a risk that the flow channel will start to leak.

Further, document US 2008/141445 A describes an inspection chamber having a plastic sleeve as well as a plastic base attached to the sleeve and provided with at least two openings to which a pipe can in each case be attached. The plastic base has a flow profile which extends between the openings, and is made up of at least two separate base parts which, at the edges thereof facing towards each other, are fixedly attached to one another by means of a joining technique, such as gluing, welding and/or pop rivets.

Furthermore, document US 2005/161088 A teaches a manhole base or liner for directing the flow of liquid from a manhole inlet opening positioned in one of a plurality of possible locations in a manhole side wall to a manhole outlet opening in the manhole side wall, and a manhole having the base or liner. The base or liner includes a perimeter, an upper surface extending to the perimeter, and a liquid flow path formed in the upper surface. The liquid flow path has, in series, first and second flow path portions, the first flow path portion defined by a first bottom wall and a pair of spaced apart side by side guide walls extending upwardly from the bottom wall, the guide walls each having a guide wall inner end and a guide wall outer end, the outer ends being located at the perimeter and being spaced apart a greater distance than the distance between the inner ends, the second flow path portion being defined by a second bottom wall, contiguous with the first bottom wall, and a pair of spaced apart side by side channel walls extending upwardly from the second bottom wall, each channel wall having an inner channel wall end and an outer channel wall end, the inner channel wall ends meeting the respective guide wall inner ends, and the outer channel wall ends being located at the perimeter.

Document EP 1174550 A2 discloses a base element for a manhole shaft. The lower section of a shaft, using prefabricated parts, has at least two channel segments assembled into an inner body with an outflow connection and at least one inflow connection. The inner body, with the component parts fitted together, is embedded into a lower part body with its base and mantle, so that the inflow and outflow connections match up with the inflows and outflows at the lower body.

Document WO 93/19258 A1 teaches that a modular system forming an inspection chamber or manhole for a drainage system comprises a base portion, an insert portion adapted to lie at least partly upon said base and having one or more drainage channels fabricated within it, a plurality of support segments of desired arc lengths, the insert portion being supported at its edges between the top of the support segments and a stack of shaft rings, wherein each piece is preformed and the structure is adapted to be assembled in situ and to be connected to the ends of drainage pipes.

Document GB 1363302 A discloses that a manhole comprises an access chamber of moulded plastics material with a closed bottom and inlet forming portions spaced around the lower end of the sides of the chamber and an invert-forming insert of moulded plastics material fitting in the bottom of the chamber and having at least one upwardly facing channel forming an invert between two of the inlet forming portions. Preferably the insert is a tight fit in the chamber bottom with its sides blocking off the unused inlets and is snapped past an inward projection just above the inlets. The insert may be either a closed body with a bottom or it may be an open shell reinforced by ribs at locations not bearing invert channels. The inlet forming portions may be knock outs in the chamber wall, sealing being effected round a pipe-end inserted in a knocked out hole by means of a grommet or the ends of the outwardly projecting blind spigots may be pierced or cut off to provide access. The upper end of the chamber is formed as a socket to receive an extension piece with an outward flange for contacting a manhole cover. Additional socketing extension pieces may be provided between the chamber and extension piece. Instead of the rectangular form shown, the chamber, extensions and insert may be of octagonal or circular cross-section and the chamber may serve simply as a former surrounded in use by low grade concrete or other settable filler or by a built-up structure.

Document US 2007/053750 A describes an inspection chamber having a plastic sleeve, a plastic base accommodated in the sleeve and at least two branches connected to the sleeve, which base has a flow profile that extends between the two branches. The base is made up of at least two separate base parts that are permanently fixed to one another at their edges facing one another, such as by welding, fusing, gluing and the like.

Document JP 6026065 A discloses an invert block structure for a manhole. Two invert blocks having laterally symmetric shape, which are bisplit so as to be inserted into a manhole through the opening of the latter after completion of the manhole, are combined on a base plate in a shape block so as to form a water channel corresponding to inlet and outlet pipes of the shape block. JP 6146313 A teaches an invert block for a man-hole and a driving channel formation method. JP 5287766 A describes further an invert manufacturing method of a sewage man-hole. According to the method, concrete is poured into a form consisting of male and female types to form an invert, and precasting the invert takes place at a plant other than a man-hole construction site.

Document EP 2295655 A2 describes a pit having a pipe, which is closed by a base and has a longitudinal-axis and an inner diameter, and has two connections for waste water pipes. A flow channel is arranged between the connections. The flow channel is made of a rigid but flexible plate by bending the plate against the walls of the pipe.

Document CN 202577351 U teaches a multi-use combined plastic inspection well, which comprises a well body and a shaft. A well bottom sluice plate with pre-formed sluices is detachably arranged at the bottom of the shaft.

Document DE 2509909 A1 discloses that a baseplate with gutter is placed into an inspection chamber. The plate is pre-fabricated and fitted directly into the bottom of the chamber.

Additionally, document JP S57151452 U describes attachment of pre-fabricated parts to a support frame in order to form a flow channel of an inspection chamber.

In view of the foregoing, it would be beneficial to provide a flow channel for various types of inspection chambers or man-holes, wherein forming of the flow channel requires a low number of parts and is less time consuming and less labour intensive.

### SUMMARY OF THE INVENTION

The invention is defined by the features of the independent claims. Some specific embodiments are defined in the dependent claims.

According to a first aspect of the present invention, there is provided a system for an inspection chamber or man-hole, the system comprising a flow channel and a support frame, the flow channel comprising at least one inlet configured to be coupled to at least one inlet pipe, at least one outlet configured to be coupled to at least one outlet pipe, and wherein the flow channel between the at least one inlet and the at least one outlet is formed by at least one bent plate, wherein the at least one plate is configured to be pressed against parts of the support frame in order to achieve a predefined form of the flow channel by bending of the at least one plate, and wherein the at least one plate comprises at least two grooves in a side of the at least one bent plate opposite to a side forming the flow channel, wherein the at least two grooves improve bending of the at least one plate due to locally decreasing a thickness of the at least one plate. The plate preferably comprises a weldable material, such as a metal or, in particular, a thermoplastic material. By welding, two or more bent and/or planar plates can be joined to form even complex surface profiles.

Various embodiments of the first aspect may comprise at least one feature from the following bulleted list:
- a first diameter of at least one pipe differs from a second diameter of at least another pipe
- the flow channel between the at least one inlet and the at least one outlet is formed by a plurality of bent plates which are welded together
- the flow channel between the at least one inlet and the at least one outlet is formed by a plurality of bent plates which are attached to each other using adhesive material
- the flow channel between the at least one inlet and the at least one outlet is formed by a plurality of bent plates which are attached to each other using mechanical joints
- the flow channel is straight
- the flow channel is configured to provide a flow connection between at least two pipes having different orientations
- an orientation of the flow channel changes at a welding line between two adjacent welded plates by an angle of 30 degrees or less
- an orientation of the flow channel changes at a position between two adjacent plates by an angle of 30 degrees or less
- the flow channel comprises at least two inlets, wherein each inlet is configured to be coupled to an inlet pipe
- the flow channel comprises at least two outlets, wherein each outlet is configured to be coupled to an outlet pipe
- the flow channel comprises a junction
- the flow channel is configured to be coupled to at least one pipe having a diameter of 110 mm or greater than 110 mm
- the flow channel comprises a support frame
- the flow channel comprises at least one extension plate which is welded to the bent plate or an integral part of the bent plate
- the at least one extension plate is fixedly attached to the frame
- the flow channel comprises at least one attachment means configured to at least temporarily attach the bent plate to the frame
- the at least one bent plate is of thermoplastic material
- the at least one bent plate is of polyethylene or polypropylene
- the at least one bent plate is of thermoset material
- the at least one extension plate is of thermoplastic material
- the at least one extension plate is of polyethylene or polypropylene
- the at least one bent plate is of thermoset material
- a thickness of the at least one bent plate is in the range between 3 mm to 30 mm
- a thickness of the at least one extension plate is in the range between 3 mm to 30 mm

According to an example of the present disclosure, there is provided an inspection chamber or man-hole comprising a base, a perimeter wall protruding from the base, a flow channel comprising at least one inlet configured to be coupled to at least one inlet pipe, at least one outlet configured to be coupled to at least one outlet pipe, and wherein the flow channel between the at least one inlet and the at least one outlet is formed by at least one bent plate, and a frame positioned on the base and configured to support the bent plate.

Various other examples may comprise at least one feature from the following bulleted list:
- the inspection chamber or man-hole comprises at least one inlet opening configured to be coupled to the at least one inlet pipe
- the inspection chamber or man-hole comprises at least one outlet opening configured to be coupled to the at least one outlet pipe
- the inspection chamber or man-hole comprises an access opening configured to be covered by a cover
- the footprint of the base is greater than the footprint of the perimeter wall
- the base and the perimeter wall are made of thermoplastic material
- the base and the perimeter wall are made of polyethylene or polypropylene
- the flow channel comprises at least one feature laid out in connection with the bulleted list of the first aspect

According to a second aspect of the present invention, there is provided a method of manufacturing a flow channel for an inspection chamber or man-hole, the method comprising measuring or determining information including at least diameters, orientations and depths of at least two pipes in the ground, cutting of at least one flat plate into a defined shape based on the measured or determined information, arranging a support frame on a base of the inspection chamber or man-hole, pressing the at least one cut plate comprising at least two grooves in a side of the at least one cut plate opposite to a side forming the flow channel against parts of the support frame in order to achieve the flow channel by bending the at least one cut plate into a predefined form, and coupling the at least one bent plate to the at least two pipes by welding.

Various embodiments of the second aspect may comprise at least one feature from the following bulleted list:
- the method further comprises attaching the at least one bent plate at least temporarily to a frame using attachment means
- the method yet further comprises attaching at least one extension plate to the frame supporting the at least one bent plate
- the at least one extension plate and the at least one bent plate are welded together
- cutting of the at least one flat plate into the defined shape takes place based on a computer calculation
- cutting of the at least one flat plate is carried out by a CNC machine or manually
- the method even further comprises cutting each plate of a plurality of flat plates into a defined shape based on the measured or determined information, bending each plate of the plurality of cut plates into a predefined form, and welding the bent plates together, attaching the bent plates to each other using adhesive material or attaching the bent plates to each other using mechanical joints in order to form the flow channel

According to an example of the present disclosure, there is provided a non-transitory computer readable memory medium having stored thereon a set of computer readable instructions that, when executed by at least one processor, cause a system to at least receive measured or determined information including diameters, orientations and depths of at least two pipes in the ground, calculate a defined shape for at least one flat plate based on the received information, wherein the flat plate is configured to be bent into a predefined form in order to form a flow channel for an inspection chamber or man-hole, transmit calculated shape data for the at least one flat plate to a CNC machine, and cause the CNC machine to cut the at least one flat plate into the defined shape.

Considerable advantages are obtained by means of certain embodiments of the present invention. A system for an inspection chamber or a man-hole and a method of manufacturing a flow channel for an inspection chamber or a man-hole are provided.

Flow channels of different inspection chambers or man-holes are typically not identical, because of varying parameters such as number of inlet pipes, number of outlet pipes, diameter of inlet pipes, diameter of outlet pipes, orientation of inlet pipes, orientation of outlet pipes, depth in the ground of inlet pipes, depth in the ground of outlet pipes, distance between inlet and outlet pipes, depth difference between inlet and outlet pipes, and the like.

According to certain embodiments of the present invention, flow channels are provided for different inspection chambers or man-holes having various parameters. Forming of each flow channel can be carried out quickly and easily, for example when building a sewer system or replacing an existing inspection chamber or man-hole by a new one and connecting it with existing pipes in the ground. According to certain embodiments, complex flow channels can be formed by a low number of bent plates. For example, only two plates are required to connect two inlet pipes with a single outlet pipe. Even more complex flow channels can be formed with a very low number of plates. The flow channels are lightweight and the dimensions can be freely selected. Non-standardized flow channels can be provided. Flow channels for any dimensions of pipes and material of the respective pipes can be provided.

According to certain embodiments, flat or planar plates can be cut into a defined shape in a plant based on measured or determined information and/or parameters. The plates are typically cut into the defined shape based on a computer calculation. The shape of the plates is typically calculated based on the measured or determined input data. In other words, the defined shape of the plates can be automatically calculated by at least one processing core. The defined shape of the plates may be provided as CAD data. The plate's mechanical dimensions may be defined using CAD software, and then translated into manufacturing directives by CAM software. The resulting directives may be transformed into commands necessary for a CNC machine to cut the plates. The CNC machine may cut the plates into the defined shape according to the calculated CAD data. Subsequently, the flow channels can be formed at the construction site by manually bending the pre-cut plates into a predefined form and welding them together or connecting the bent plates otherwise. Of course, the plates may also be cut into the defined shape by another device or even manually.

### BRIEF DESCRIPTION OF THE DRAWINGS

FIGURE 1 illustrates a schematic perspective view of a flow channel in accordance with at least some embodiments of the present invention,
FIGURE 2 illustrates a schematic front view of a flow channel in accordance with at least some embodiments of the present invention,
FIGURE 3 illustrates a schematic side view of a flow channel in accordance with at least some embodiments of the present invention,
FIGURE 4 illustrates a schematic perspective view of another flow channel in accordance with at least some embodiments of the present invention,
FIGURE 5 illustrates a schematic front view of another flow channel in accordance with at least some embodiments of the present invention,
FIGURE 6 illustrates a schematic side view of another flow channel in accordance with at least some embodiments of the present invention,
FIGURE 7 illustrates a schematic top view of another flow channel in accordance with at least some embodiments of the present invention,
FIGURE 8 illustrates a schematic perspective view of a further flow channel in accordance with at least some embodiments of the present invention,
FIGURE 9 illustrates a schematic front view of a further flow channel in accordance with at least some embodiments of the present invention, and
FIGURE 10 illustrates a schematic top view of two cut plates of a yet further flow channel in accordance with at least some embodiments of the present invention.

### EMBODIMENTS

In this document, the term "flow channel" means a flow system through which material such as sewage water and storm drainage can flow. The channel is configured to be connected to at least one inlet pipe and at least one outlet pipe. The channel is configured to be arranged within an inspection chamber or man-hole. The channel is open on one side to provide access to the channel.

In this document, the term "inspection chamber" means a structure by means of which a person can have access to a flow channel positioned within said structure. The structure comprises a base, a perimeter wall, at least one inlet opening, at least one outlet opening and an access opening. A flow channel is further arranged within the structure. The structure is dimensioned such that a person cannot completely enter the structure.

In this document, the term "man-hole" means a structure by means of which a person can have access to a flow channel positioned within said structure. The structure comprises a base, a perimeter wall, at least one inlet opening, at least one outlet opening and an access opening. A flow channel is further arranged within the structure. The structure is dimensioned such that a person can completely enter the structure via the access opening. Entering through the access opening may, for example, take place using a ladder.

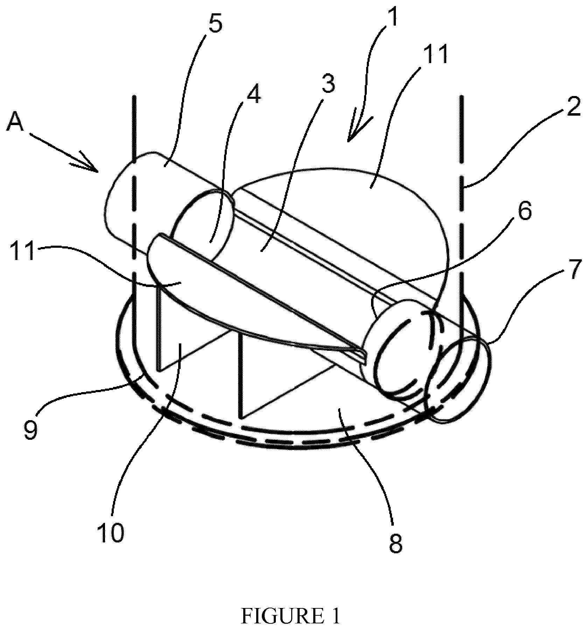

In FIGURE 1 a schematic perspective view of a flow channel 1 in accordance with at least some embodiments of the present invention is illustrated. The flow channel 1 is shown within an inspection chamber 2. Such inspection chambers 2 of a sewage system are, for example, located at a distance of about 40 m - 50 m to each other. The inspection chambers 2 are typically connected to each other by sewage pipes. In FIGURE 1, an inspection chamber 2 comprising a base 8 and a perimeter wall 9 is shown. The inspection chamber 2 further includes an inlet opening and an outlet opening in the perimeter wall 9. An inlet pipe 5 is coupled to the inspection chamber 2 on one side and an outlet pipe 7 is coupled to the inspection chamber 2 on an opposite side.

Within the inspection chamber 2 a flow channel 1 is arranged. The flow channel 1 comprises an inlet 4 configured to be coupled to the inlet pipe 5. The flow channel further comprises an outlet 6 configured to be coupled to the outlet pipe 7. The flow channel 1 between the inlet 4 and the outlet 6 is formed by at least one bent plate 3. In FIGURE 1, the shown flow channel 1 is straight.

A support frame 10 is arranged on the base 8 of the inspection chamber 2. The frame 10 is configured to support the at least one bent plate 3 forming the flow channel 1. When installing the plate 3, the plate 3 is bent into a form corresponding to the form of a part of the frame 10. In other words, the predefined form of the flow channel 1 is achieved by pressing the plate 3 against parts of the frame 10. The bent plate 3 may be at least temporarily attached to the frame using attachment means, for example clips, in order to align the at least one plate 3 and the frame 10 for welding the plate 3 and the frame 10 together. The thickness of the at least one bent plate 3 is typically in the range between 3 mm and 30 mm, and thus it is possible to bend the at least one plate 3 manually. Typically, heating of the at least one plate 3 is not required in order to bend the plate into a predefined form. The surface of the plate 3 forming the flow channel 1 is smooth, i.e. there are typically no corners, steps, bumps, and the like. The flow channel 1 is normally U-shaped.

Extension plates 11 are further connected to the at least one bent plate 3. The extension plates 11 cover the frame 10 and prevent overflowing of material from the flow channel 1. The extension plates and the at least one bent plate 3 are welded together or the extension plates 11 are an integral part of the bent plate 3. Typically, the at least one bent plate 3 and the extension plates 11 are of the same material, for example thermoplastic material, in particular a polyolefin material, such as polyethylene (PE) or polypropylene (PP). Other suitable thermoplastic materials include weldable thermoplastic materials, such as polystyrene (PS), acrylonitrile butadiene styrene (ABS), polyimide (PI) and polyamide (PA) or a thermoset material. The extension plates 11 are further fixedly attached to the frame 10. Also the frame 10 may be of the same material as the at least one plate 3 and the extension plates 11. Thus, all parts forming the flow channel 1 can be welded together.

After installation of the flow channel 1 within the inspection chamber 2 and coupling the flow channel 1 to inlet and outlet pipes 5, 7, material can flow through the inspection chamber 2 along the flow channel 1 as indicated by arrow A. The pipes 5, 7 are typically welded to the flow channel 1.

Of course, the flow channel 1 may also be located within a man-hole instead of the inspection chamber 2.

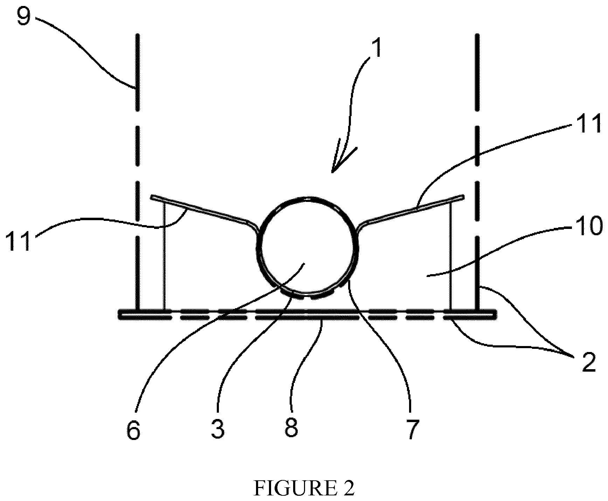

In FIGURE 2 a schematic front view of a flow channel 1 in accordance with at least some embodiments of the present invention is illustrated. The flow channel 1 comprises an inlet configured to be coupled to an inlet pipe. The flow channel further comprises an outlet 6 configured to be coupled to an outlet pipe 7. The flow channel 1 between the inlet 4 and the outlet 6 is formed by a bent plate 3. In FIGURE 2, the shown flow channel 1 is straight.

Extension plates 11 are connected to the bent plate 3. The angle between the extension plates 11 and the basis 8 may vary depending on in which country the flow channel 1 is to be installed. Also the distance between the extension plates 11 and the baseline of the bent plate 3 or the lowest point of the plate 3, may vary depending on in which country the flow channel 1 is to be installed. The distance between the extension plates 11 and the baseline of the bent plate 3 or the lowest point of the plate 3 may be, for example, greater than 1/2 of the diameter of the pipe 7.

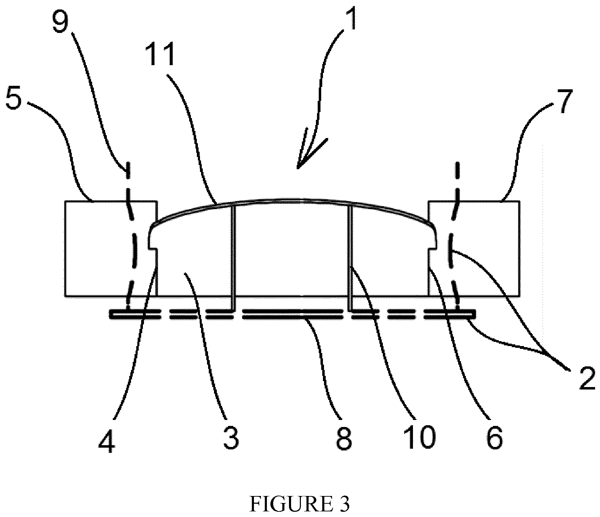

In FIGURE 3 a schematic side view of a flow channel 1 in accordance with at least some embodiments of the present invention is illustrated. The flow channel 1 comprises an inlet 4 configured to be coupled to an inlet pipe 5. The flow channel further comprises an outlet 6 configured to be coupled to an outlet pipe 7. The flow channel 1 between the inlet 4 and the outlet 6 is formed by a bent plate 3. In FIGURE 3, the shown flow channel 1 is straight. The inlet 4 and the outlet 6 may be configured to be coupled to pipes 5, 7 having a diameter of 110 mm or greater than 110 mm, for example to pipes 5, 7 having a diameter in the range between 110 mm and 3000 mm.

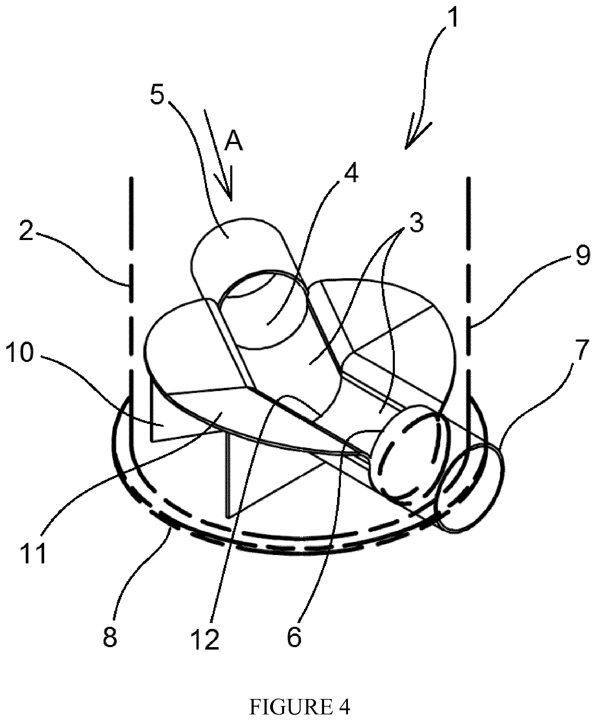

In FIGURE 4 a schematic perspective view of another flow channel 1 in accordance with at least some embodiments of the present invention is illustrated. The flow channel 1 comprises an inlet 4 configured to be coupled to an inlet pipe 5. The flow channel further comprises an outlet 6 configured to be coupled to an outlet pipe 7. The flow channel 1 between the inlet 4 and the outlet 6 is formed by a plurality of bent plates 3. In FIGURE 4, the shown flow channel 1 is not straight. The flow channel 1 changes its orientation by about 30 degrees.

The bent plates 3 are welded together along a welding line 12. Extension plates 11 are further welded to the bent plates 3 as well as to each other on each side of the flow channel 1. The orientation of the flow channel 1 changes at the welding line 12. Typically, the orientation changes by 30 degrees or less. Thus, material cannot get stuck and clogging of the flow channel 1 can be avoided.

The orientation of the first part of the flow channel 1 is identical with the orientation of the inlet pipe 5 and the orientation of the second part of the flow channel 1 is identical with the orientation of the outlet pipe 7. In the shown flow channel 1, the orientation of the flow channel only changes once. According to certain embodiments, the orientation of the flow channel can change several times, for instance. According to certain other embodiments, the orientation of the first part of the flow channel 1 is not identical with the orientation of the inlet pipe 5 and/or the orientation of the second part of the flow channel 1 is not identical with the orientation of the outlet pipe 7.

Other jointing methods than welding can be used in accordance with the present invention in order to connect adjacent plates 3, extension plates 11 and/or the frame 10 to each other. For example, adjacent plates 3 may be fixedly attached to each other using adhesive. The term adhesive refers to a material, by means of which plates 3, extension plates 11 and/or the frame 10 can be attached to each other. The adhesive used in the embodiments may be, for example, an epoxy. The adhesive used is selected in such a way that the adhesive used will have sufficient adhesion to the plates 3, extension plates 11 and/or the frame 10. According to certain embodiments, the adhesive selected has a short hardening time, such as a few seconds or less than a minute at most. According to another certain embodiment, the adhesive hardens at least partly within this time so that the adhesive will be able to hold the plates 3, extension plates 11 and/or the frame 10 in place. The final hardening can take clearly more time and the final hardening can even be planned to take place in connection with later process stages. According to other embodiments, adjacent plates 3, extension plates 11 and/or the frame 10 may be attached to each other by mechanical joints. Adjacent plates may, for example, include tongue and groove joints or other mechanical connections. Adhesive may be additionally used in order to seal the joint to avoid leaking of the flow channel 1.

Of course, the flow channel 1 may also be located within a man-hole instead of the inspection chamber 2.

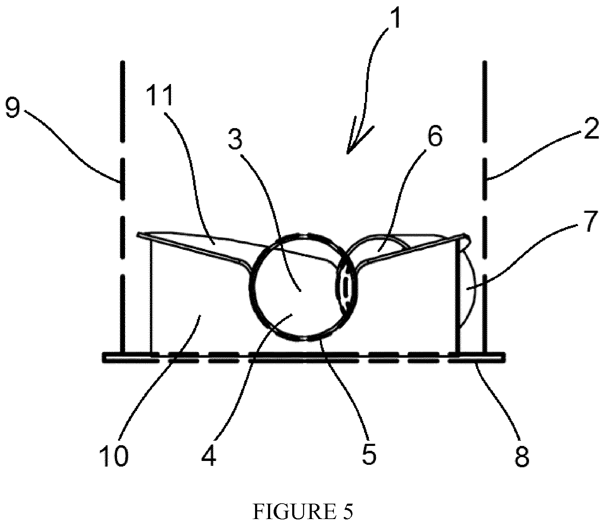

In FIGURE 5 a schematic front view of another flow channel 1 in accordance with at least some embodiments of the present invention is illustrated. The flow channel 1 comprises an inlet 4 configured to be coupled to an inlet pipe 5. The flow channel further comprises an outlet 6 configured to be coupled to an outlet pipe 7. The flow channel 1 between the inlet 4 and the outlet 6 is formed by bent plates 3. In FIGURE 5, the shown flow channel 1 is not straight. The flow channel 1 changes its orientation by about 30 degrees.

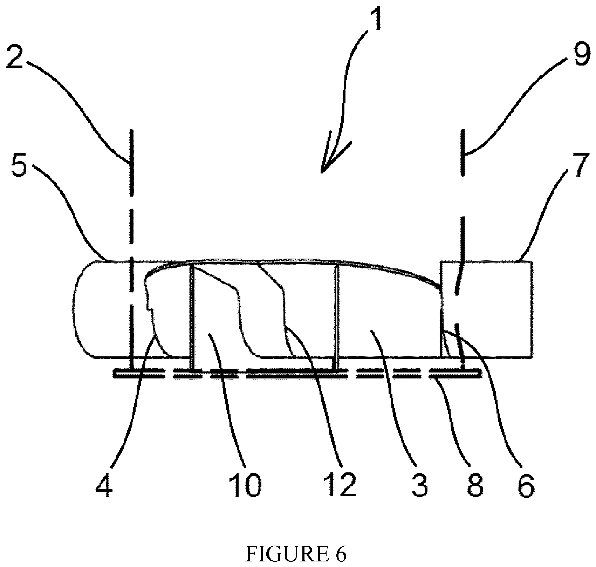

In FIGURE 6 a schematic side view of another flow channel 1 in accordance with at least some embodiments of the present invention is illustrated. The flow channel 1 comprises an inlet 4 configured to be coupled to an inlet pipe 5. The flow channel further comprises an outlet 6 configured to be coupled to an outlet pipe 7. The flow channel 1 between the inlet 4 and the outlet 6 is formed by bent plates 3. In FIGURE 6, the shown flow channel 1 is not straight. The flow channel 1 changes its orientation by about 30 degrees at the welding line 12.

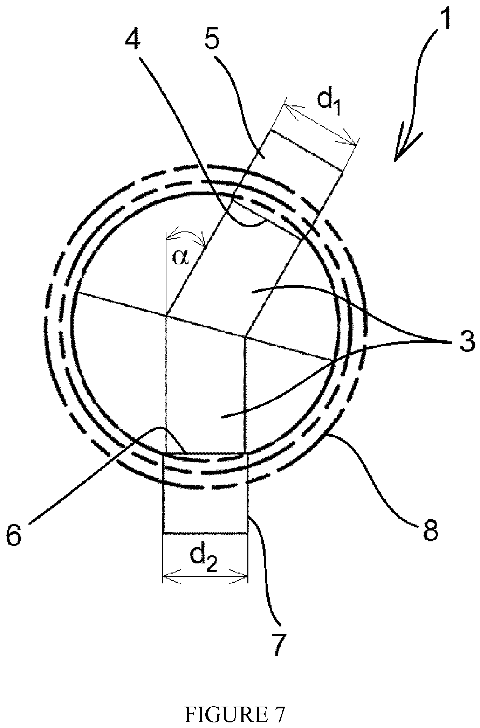

In FIGURE 7 a schematic top view of another flow channel 1 in accordance with at least some embodiments of the present invention is illustrated. The flow channel 1 comprises an inlet 4 configured to be coupled to an inlet pipe 5. The flow channel further comprises an outlet 6 configured to be coupled to an outlet pipe 7. The flow channel 1 between the inlet 4 and the outlet 6 is formed by bent plates 3. In FIGURE 7, the shown flow channel 1 is not straight. The flow channel 1 changes its orientation by about 30 degrees as shown by the angle α. The inlet pipe 5 has a first diameter di and the outlet pipe has a second diameter d₂. The first diameter d₁ and the second diameter d₂ may be identical or different. Typically, in case that there is only one inlet pipe 5 and one outlet pipe 7, the diameters d₁, d₂ are identical.

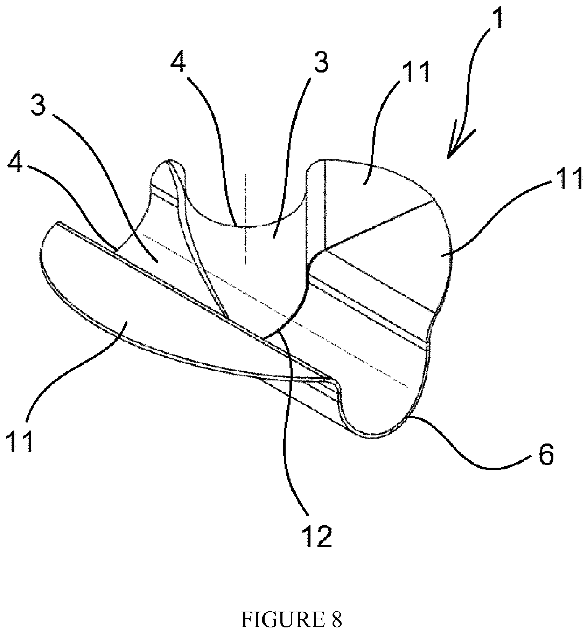

In FIGURE 8 a schematic perspective view of a further flow channel 1 in accordance with at least some embodiments of the present invention is illustrated. The flow channel 1 comprises two inlets 4, wherein each inlet 4 is configured to be coupled to a respective inlet pipe 5. The flow channel 1 is configured to be coupled to inlet pipes 5 having different orientation. The diameters of the inlet pipes 5 may be identical or different according to certain embodiments. The flow channel 1 further comprises a single outlet 6 configured to be coupled to an outlet pipe 7, wherein the orientation of the outlet pipe coincides with one of the inlet pipes. According to certain embodiments, all pipes 5, 7 may have a different orientation and/or diameter. Additionally, the pipes may arrive and/or depart at different depths in the ground. There is a depth difference between an inlet 4 and an outlet 6 of 1 cm - 2 cm per m length of the flow channel 1, for instance.

The flow channel 1 between the inlets 4 and the outlet 6 is formed by only two bent plates 3. Within the flow channel 1, a junction is located. Material flowing through the flow channel 1 from the first inlet 4 and from the second inlet 4 can flow towards the outlet 6 from the junction at the welding line 12. In other words, the flows from the first inlet 4 and from the second inlet 4 are combined to be one flow after the junction.

The flow channel 1 is made by only two bent plates 3. The pre-cut plates 3 can be manually bent at the construction site and welded together along welding line 12. Extension plates 11 may be additionally welded to the bent plates 3 or be an integral part of the bent plates 3. The installation of the flow channel 1 is less time consuming and less labour intensive than e.g. bolting a plurality of U-shaped profiles together.

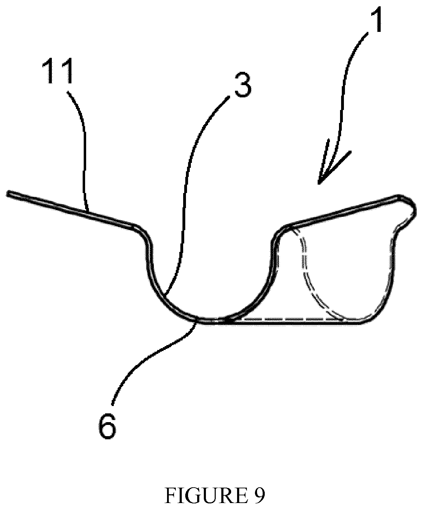

In FIGURE 9 a schematic front view of a further flow channel 1 in accordance with at least some embodiments of the present invention is illustrated. The flow channel 1 comprises two inlets and one outlet 6. The flow channel 1 is made by only two bent plates 3.

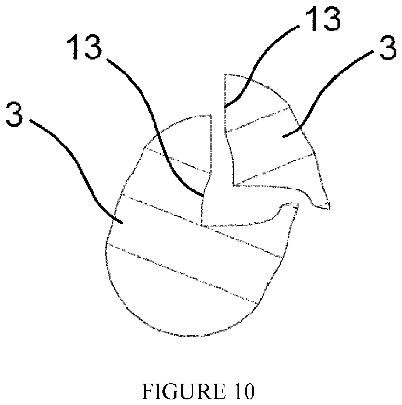

In FIGURE 10 a schematic top view of two cut plates 3 of a yet further flow channel 1 in accordance with at least some embodiments of the present invention is illustrated. Flat plates 3 are cut based on measured or determined information including orientations, diameters and depths in the ground of different pipes. The shape of the plates 3 may be defined by a computer calculation based on the measured or determined information. Defined shape data of the plates 3 may then be provided as CAD data. The plates 3 may then be cut by a CNC machine into the defined shape. A flow channel 1 having two inlets and one outlet can be formed by bending the plates 3 shown in FIGURE 10 against a frame and welding the bent plates 3 together. Of course, the plates 3 may also be cut by another device, for example a plasma burner, or even manually using a saw.

According to the invention, the plates 3 comprise a plurality of grooves in the rear side of the plates 3, i.e. in the side opposite to the side forming the flow channel 1. The grooves improve bending of the plates 3 due to locally decreasing the thickness of the plates 3, thus providing some sort of flexibility. The grooves may be arranged locally in the rear side, for example only where a small bending radius is required. Of course, the grooves may also be arranged over the entire rear surface of the plates. The grooves may be arranged at identical or varying distances to each other.

According to certain embodiments, the grooves do not extend to one edge or to the edges of a respective plate 3. Instead, an end of a respective groove is located at a distance of a few millimetres, for example at a distance in the range between 5 mm to 30 mm, from the respective edge of the plate 3. Thus, welding of two adjacent plates 3 to each other is enhanced, while a sufficient flexibility for bending the plates 3 is still provided.

The grooves may have identical or different depth, length and/or shape. The depth of a groove may be in the range between 10 % and 70 % of the thickness of a respective plate 3, for instance. The grooves may have, for example, a depth of 5 mm and the thickness of the plate may be, for example, 10 mm. The grooves may be arranged parallel or at an angle to each other. The side forming the flow channel is typically smooth.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in forming of a flow channel for an inspection chamber or man-hole as well as in inspection chambers and other subterranean chambers and wells.

### ACRONYMS LIST

- CAD: computer aided design
- CAM: computer aided manufacturing
- CNC: computer numerical control

### REFERENCE SIGNS LIST

- 1: flow channel
- 2: inspection chamber
- 3: plate
- 4: inlet
- 5: inlet pipe
- 6: outlet
- 7: outlet pipe
- 8: base
- 9: perimeter wall
- 10: frame
- 11: extension plate
- 12: welding line
- 13: cut line
- A: direction of flow
- d₁: first diameter
- d₂: second diameter
- α: angle

### CITATION LIST

### Patent Literature

US 4867411 A
US 2008/141445 A
US 2005/161088 A
EP 1174550 A2
WO 93/19258 A1
GB 1363302 A
US 2007/053750 A
JP 6026065
JP 6146313
JP 5287766 A
EP 2295655 A2
CN 202577351 U
DE 2509909 A1
JP S57151452 U

Non Patent Literature

## Claims

1. A system for an inspection chamber (2) or a man-hole, the system comprising a flow channel (1) and a support frame (10), the flow channel (1) comprising:
- at least one inlet (4) configured to be coupled to at least one inlet pipe (5), and
- at least one outlet (6) configured to be coupled to at least one outlet pipe (7),
- wherein the flow channel (1) between the at least one inlet (4) and the at least one outlet (6) is formed by at least one bent plate (3),
- wherein the at least one plate is configured to be pressed against parts of the support frame (10) in order to achieve a predefined form of the flow channel (1) by bending of the at least one plate (3),
**characterized in that**
- the at least one plate (3) comprises at least two grooves in a side of the at least one plate (3) opposite to a side forming the flow channel (1), wherein the at least two grooves improve bending of the at least one plate (3) due to locally decreasing a thickness of the at least one plate (3).

2. The system according to claim 1, wherein the flow channel (1) between the at least one inlet (4) and the at least one outlet (6) is formed by a plurality of bent plates (3) which are welded together, attached to each other using adhesive material or attached to each other by mechanical joints.

3. The system according to claim 2, wherein an orientation of the flow channel (1) changes at a welding line (12) between two adjacent welded plates (3) or at a position between two adjacent plates (3) by an angle (α) of 30 degrees or less.

4. The system according to any one of claims 1-3, wherein the flow channel (1) comprises a junction.

5. The system according to any one of claims 1-4, wherein the at least one plate is configured to be manually pressed against parts of the support frame (10).

6. The system according to claim 1, wherein the flow channel (1) comprises at least one extension plate (11) which is welded to the bent plate (3) or an integral part of the bent plate (3).

7. The system according to any one of claims 1-6, wherein the flow channel (1) comprises at least one attachment means configured to at least temporarily attach the bent plate (3) to the frame (10).

8. The system according to any one of claims 1-7, wherein the flow channel (1) is configured to be arranged within an inspection chamber (2) or man-hole.

9. A method of manufacturing a flow channel (1) for an inspection chamber (2) or man-hole, the method comprising:
- measuring or determining information including at least diameters, orientations and depths of at least two pipes (5, 7) in the ground,
- cutting of at least one flat plate (3) into a defined shape based on the measured or determined information,
- arranging a support frame (10) on a base of the inspection chamber or man-hole,
- pressing the at least one cut plate (3) comprising at least two grooves in a side of the at least one cut plate (3) opposite to a side forming the flow channel against parts of the support frame (10) in order to achieve the flow channel (1) by bending the at least one cut plate (3) into a predefined form, and
- coupling the at least one bent plate (3) to the at least two pipes (5, 7) by welding.

10. The method according to claim 10, the method further comprising:
- attaching the at least one bent plate (3) at least temporarily to a frame (10) using attachment means.

11. The method according to claim 10, the method yet further comprising:
- attaching at least one extension plate (11) to the frame (10) supporting the at least one bent plate (3).

12. The method according to claim 11, wherein the at least one extension plate (11) and the at least one bent plate (3) are welded together.

13. The method according to any one of claims 9-12, wherein cutting of the at least one flat plate (3) into the defined shape takes place based on a computer calculation.

## Patentansprüche

1. System für eine Inspektionskammer (2) oder ein Mannloch, wobei das System einen Strömungskanal (1) und einen Stützrahmen (10) umfasst, wobei der Strömungskanal (1) Folgendes umfasst:
- mindestens einen Einlass (4), der zum Koppeln an mindestens ein Einlassrohr (5) ausgestaltet ist, und
- mindestens einen Auslass (6), der zum Koppeln an mindestens ein Auslassrohr (7) ausgestaltet ist,
- wobei der Strömungskanal (1) zwischen dem mindestens einen Einlass (4) und dem mindestens einen Auslass (6) durch mindestens eine gebogene Platte (3) gebildet ist,
- wobei die mindestens eine Platte dazu ausgestaltet ist, gegen Teile des Stützrahmens (10) gedrückt zu werden, um eine vordefinierte Form des Strömungskanals (1) durch Biegen der mindestens einen Platte (3) zu erzielen,
**dadurch gekennzeichnet, dass**
- die mindestens eine Platte (3) mindestens zwei Nuten in einer Seite der mindestens einen Platte (3) umfasst, die einer den Strömungskanal (1) bildenden Seite gegenüberliegt, wobei die mindestens zwei Nuten durch örtliche Reduzierung einer Dicke der mindestens einen Platte (3) das Biegen der mindestens einen Platte (3) verbessern.

2. System nach Anspruch 1, wobei der Strömungskanal (1) zwischen dem mindestens einen Einlass (4) und dem mindestens einen Auslass (6) durch eine Vielzahl von gebogenen Platten (3) gebildet ist, die miteinander verschweißt, unter Verwendung von Klebematerial aneinander befestigt oder durch mechanische Verbindungen aneinander befestigt sind.

3. System nach Anspruch 2, wobei sich eine Ausrichtung des Strömungskanals (1) an einer Schweißlinie (12) zwischen zwei benachbarten geschweißten Platten (3) oder an einer Position zwischen zwei benachbarten Platten (3) um einen Winkel (α) von 30 Grad oder weniger ändert.

4. System nach einem der Ansprüche 1 - 3, wobei der Strömungskanal (1) einen Übergang umfasst.

5. System nach einem der Ansprüche 1 - 4, wobei die mindestens eine Platte dazu ausgestaltet ist, manuell gegen Teile des Stützrahmens (10) gedrückt zu werden.

6. System nach Anspruch 1, wobei der Strömungskanal (1) mindestens eine Verlängerungsplatte (11) umfasst, die mit der gebogenen Platte (3) verschweißt oder ein integraler Teil der gebogenen Platte (3) ist.

7. System nach einem der Ansprüche 1 - 6, wobei der Strömungskanal (1) mindestens ein Befestigungsmittel umfasst, das dazu ausgestaltet ist, die gebogene Platte (3) mindestens vorübergehend an dem Rahmen (10) zu befestigen.

8. System nach einem der Ansprüche 1 - 7, wobei der Strömungskanal (1) zur Anordnung in einer Inspektionskammer (2) oder einem Mannloch ausgestaltet ist.

9. Verfahren zum Herstellen eines Strömungskanals (1) für eine Inspektionskammer (2) oder ein Mannloch, wobei das Verfahren Folgendes umfasst:
- Messen oder Bestimmen von Informationen, die mindestens Durchmesser, Ausrichtungen und Tiefen von mindestens zwei Rohren (5, 7) im Boden umfassen,
- Schneiden mindestens einer ebenen Platte (3) zu einer definierten Form auf der Grundlage der gemessenen oder bestimmten Informationen,
- Anordnen eines Stützrahmens (10) auf einem Boden der Inspektionskammer oder des Mannlochs,
- Drücken der mindestens einen geschnittenen Platte (3), die mindestens zwei Nuten in einer Seite der mindestens einen geschnittenen Platte (3), die einer den Strömungskanal bildenden Seite gegenüberliegt, umfasst, gegen Teile des Stützrahmens (10), um den Strömungskanal (1) durch Biegen der mindestens einen geschnittenen Platte (3) zu einer vorgegebenen Form zu erzielen, und
- Koppeln der mindestens einen gebogenen Platte (3) an die mindestens zwei Rohre (5, 7) durch Schweißen.

10. Verfahren nach Anspruch 10, wobei das Verfahren ferner Folgendes umfasst:
- Befestigen der mindestens einen gebogenen Platte (3) mindestens vorübergehend an einem Rahmen (10) unter Verwendung von Befestigungsmitteln.

11. Verfahren nach Anspruch 10, wobei das Verfahren ferner noch Folgendes umfasst:
- Befestigen mindestens einer Verlängerungsplatte (11) an dem Rahmen (10), der die mindestens eine gebogene Platte (3) stützt.

12. Verfahren nach Anspruch 11, wobei die mindestens eine Verlängerungsplatte (11) und die mindestens eine gebogene Platte (3) miteinander verschweißt werden.

13. Verfahren nach einem der Ansprüche 9 - 12, wobei das Schneiden der mindestens einen ebenen Platte (3) zu der definierten Form auf der Grundlage einer Computerberechnung erfolgt.

## Revendications

1. Système pour chambre d'inspection (2) ou regard, le système comprenant un canal d'écoulement (1) et un cadre de support (10), le canal d'écoulement (1) comprenant :
- au moins une entrée (4) conçue pour être raccordée à au moins un conduit d'entrée (5), et
- au moins une sortie (6) conçue pour être raccordée à au moins un conduit de sortie (7),
- le canal d'écoulement (1) entre l'au moins une entrée (4) et l'au moins une sortie (6) étant formé par au moins une plaque coudée (3),
- l'au moins une plaque étant conçue pour être plaquée contre des parties du cadre de support (10) afin d'obtenir une forme prédéfinie du canal d'écoulement (1) par pliage de l'au moins une plaque (3),
**caractérisé en ce que**
- l'au moins une plaque (3) comprend au moins deux rainures d'un côté de l'au moins une plaque (3) opposé à un côté formant le canal d'écoulement (1), les au moins deux rainures améliorant le pliage de l'au moins une plaque (3) du fait de diminuer localement une épaisseur de l'au moins une plaque (3).

2. Système selon la revendication 1, le canal d'écoulement (1) entre l'au moins une entrée (4) et l'au moins une sortie (6) étant formé par une pluralité de plaques coudées (3) qui sont soudées ensemble, fixées les unes aux autres à l'aide d'un matériau adhésif ou fixées les unes aux autres par des joints mécaniques.

3. Système selon la revendication 2, une orientation du canal d'écoulement (1) changeant au niveau d'une ligne de soudage (12) entre deux plaques soudées (3) adjacentes ou au niveau d'une position entre deux plaques (3) adjacentes d'un angle (a) de 30 degrés ou moins.

4. Système selon l'une quelconque des revendications 1 à 3, le canal d'écoulement (1) comprenant une jonction.

5. Système selon l'une quelconque des revendications 1 à 4, l'au moins une plaque étant conçue pour être pressée manuellement contre des parties du cadre de support (10).

6. Système selon la revendication 1, le canal d'écoulement (1) comprenant au moins une plaque d'extension (11) qui est soudée à la plaque coudée (3) ou à une partie intégrante de la plaque coudée (3).

7. Système selon l'une quelconque des revendications 1 à 6, le canal d'écoulement (1) comprenant au moins un moyen de fixation conçu pour fixer au moins temporairement la plaque coudée (3) au cadre (10).

8. Système selon l'une quelconque des revendications 1 à 7, le canal d'écoulement (1) étant conçu pour être disposé à l'intérieur d'une chambre d'inspection (2) ou d'un regard.

9. Procédé de fabrication d'un canal d'écoulement (1) pour une chambre d'inspection (2) ou un regard, le procédé comprenant les étapes consistant à :
- mesurer ou déterminer des informations incluant au moins des diamètres, des orientations et des profondeurs d'au moins deux conduits (5, 7) dans le sol,
- découper au moins une plaque plane (3) selon une forme définie en fonction des informations mesurées ou déterminées,
- disposer un cadre de support (10) sur une base de la chambre d'inspection ou du regard,
- presser l'au moins une lame découpée (3) comprenant au moins deux rainures d'un côté de l'au moins une lame découpée (3) opposé à un côté formant le canal d'écoulement contre des parties du cadre de support (10) afin d'obtenir le canal d'écoulement (1) par pliage de l'au moins une plaque découpée (3) en une forme prédéfinie, et
- accoupler par soudure l'au moins une plaque coudée (3) aux au moins deux conduits (5, 7).

10. Procédé selon la revendication 10, le procédé comprenant en outre l'étape consistant à :
- fixer au moins temporairement l'au moins une plaque coudée (3) à un cadre (10) à l'aide d'un moyen de fixation.

11. Procédé selon la revendication 10, le procédé comprenant encore en outre l'étape consistant à :
- fixer au moins une plaque d'extension (11) au cadre (10) supportant l'au moins une plaque coudée (3).

12. Procédé selon la revendication 11, l'au moins une plaque d'extension (11) et l'au moins une plaque courbée (3) étant soudées ensemble.

13. Procédé selon l'une quelconque des revendications 9 à 12, la découpe de l'au moins une plaque plane (3) dans la forme définie ayant lieu sur la base d'un calcul informatique.
